# FASCICULE DE BREVET EUROPEEN

(11) **EP 1 408 646 B1**
(45) Date de publication et mention de la délivrance du brevet: **12.03.2008**
(21) Numéro de dépôt: 03292358.3
(22) Date de dépôt: 26.09.2003
(51) Int. Cl.: H04L 12/24

(54) **Dispositif d'affichage graphique hiérarchisé d'équipements de réseau pour un système de gestion de réseau de communications**
System zur grafischen Anzeige von Netzwerkeinrichtungen für ein Verwaltungssystem eines Kommunikationsnetzes
System for graphically displaying network equipment for a communications network management system

(30) Priorité: 10.10.2002 FR 0212573
(43) Date de publication de la demande: 14.04.2004
(73) Titulaire: Alcatel Lucent, 75008 Paris (FR)
(72) Inventeur: Chevanne, Michel, 92140 Clamart (FR); Lapraye, Bertrand, 91190 Gif sur Yvette (FR)
(74) Mandataire: Sciaux, Edmond

(56) Documents cités:
- EP-A- 1 094 635
- US-A- 5 958 012
- HIROKO FUJI ET AL: "DUALQUEST: REAL-TIME BIFOCAL NETWORK VISUALIZATION SYSTEM" IEICE TRANSACTIONS ON COMMUNICATIONS, INSTITUTE OF ELECTRONICS INFORMATION AND COMM. ENG. TOKYO, JP, vol. E78-B, no. 1, 1995, pages 68-73, XP000495106 ISSN: 0916-8516

## Description

L'invention concerne le domaine de la gestion d'équipements d'un réseau de communications, et plus particulièrement celui de la gestion de l'affichage d'images représentatives d'équipements de réseau.

Les systèmes de gestion de réseau (ou NMS pour « Network Management System »), également appelés systèmes d'exploitation du réseau, ont été conçus de manière à permettre aux gestionnaires (ou opérateurs) des réseaux de gérer et surveiller les équipements qui constituent leurs réseaux. Ils comportent à cet effet des outils dédiés, parmi lesquels un outil de gestion permettant d'afficher sur un écran, via une interface graphique, par exemple de type GUI (pour « Graphical User Interface »), des images représentant de façon réaliste certains équipements du réseau, et notamment leurs configurations. On entend ici par « équipement » tout type de matériel, comme par exemple des serveurs, des terminaux, des commutateurs, des routeurs ou des concentrateurs, capable d'échanger des données selon un protocole de gestion de réseau avec le système de gestion NMS, comme par exemple le protocole SNMP (pour « Simple Network Management Protocol » RFC 2571-2580).

Grâce à de tels outils, il est possible de visualiser certains éléments et sous-éléments qui constituent certains équipements, comme par exemple des bâtis (ou « racks »), des rayonnages (ou « shelves »), des fentes (ou « slots »), des cartes à circuits intégrés, voire même des ports d'entrée/sortie. Parfois même, les images sont accompagnées d'informations représentatives des états (ou « statuts ») des éléments ou sous-éléments.

On entend ici par « sous-élément » un élément appartenant à un niveau hiérarchique inférieur à celui d'un élément qui l'intègre. De même on entend par « sous-niveau » le niveau d'un sous-élément par rapport au niveau de l'élément qui l'intègre.

De tels outils de visualisation sont par exemple décrits dans le brevet US 5 958 012, au nom de la société Computer Associates, ou bien dans la demande de brevet européen EP 1 094 635, au nom de la société Nortel, ou enfin dans le document « *DualQuest : Real-Time bifocal network visualization system »*, de Hiroko Fuji et al., « IEICE Transactions on communication, Institute of Electronics Information and Communication Engineering », Tôkyô, 1995.

Ces outils connus n'apportent pas une entière satisfaction dans la mesure où ils sont soit dédiés exclusivement à un type d'équipement, de sorte qu'ils doivent être systématiquement modifiés chaque fois qu'un nouveau type d'équipement est intégré à un réseau, soit dédiés à de nombreux types d'équipements, grâce à des bibliothèques d'images, mais sans tenir compte de la hiérarchie entre les éléments et sous-éléments qui constituent les équipements, de sorte qu'ils ne permettent pas de « naviguer » d'un niveau à l'autre, comme par exemple des bâtis vers les rayonnages.

L'invention a donc pour but de remédier à tout ou partie des inconvénients précités.

Elle propose à cet effet un dispositif dédié à la gestion de l'affichage d'images représentatives d'équipements d'un réseau de communications, comportant des éléments associés à des niveaux hiérarchisés. Ce dispositif de gestion se caractérise par le fait, d'une part, que chaque élément d'équipement est associé à un jeu primaire de données, stocké dans une mémoire et qui le représente (graphiquement) au sein de son niveau d'appartenance lorsqu'il n'est pas rattaché spécifiquement à un niveau supérieur au sien, et/ou au moins un jeu secondaire de données, également stocké dans la mémoire et qui le représente (graphiquement) au sein de son niveau d'appartenance lorsqu'il est rattaché à un niveau supérieur ou égal au sien, et d'autre part, qu'il comprend des moyens de gestion capables, lorsqu'ils reçoivent une requête désignant un niveau choisi d'un équipement avec ou sans rattachement, d'accéder aux jeux primaires et secondaires afin d'extraire de la mémoire les jeux primaires ou secondaires des éléments de l'équipement qui appartiennent au niveau désigné et aux niveaux qui lui sont inférieurs, selon que ce niveau est désigné avec ou sans rattachement.

Un élément pouvant disposer d'une ou plusieurs représentations graphiques dépendant des niveaux auxquels elles sont rattachées, il est donc possible de l'observer sous différentes formes en fonction du niveau désiré. En d'autres termes, il est désormais possible d'effectuer un « zoom » avant ou arrière sur les sous-éléments qui constituent un élément ou sur les éléments qui sont constitués par des sous-éléments.

Par ailleurs, les moyens de gestion peuvent être agencés pour adresser les jeux primaires ou secondaires extraits de la mémoire à une interface graphique du système de gestion de réseau (NMS), de préférence de type GUI.

En outre, certains éléments peuvent être associés à des jeux primaires et secondaires au moins en partie identiques.

De plus, les moyens de gestion peuvent être agencés de manière à rafraîchir les données des éléments affichés lorsqu'ils reçoivent, par exemple du système de gestion de réseau (NMS), un message signalant qu'un événement concernant les éléments affichés est survenu au sein du réseau.

L'invention porte également sur un serveur de gestion de réseau de communications équipé d'un dispositif de gestion du type de celui présenté ci-avant, éventuellement intégré dans son module de contrôle.

L'invention peut notamment être mise en oeuvre dans toutes les technologies réseaux qui doivent être gérées, et notamment dans les réseaux de transmission (par exemple de type WDM, SONET, SDH), de données (par exemple de type Internet-IP ou ATM) ou de voix (par exemple de type classique, mobile ou NGN).

D'autres caractéristiques et avantages de l'invention apparaîtront à l'examen de la description détaillée ci-après, et des dessins annexés, sur lesquels :
- la figure 1 illustre de façon schématique une partie d'un exemple de réseau de communications équipé d'un dispositif selon l'invention,
- la figure 2 est une image d'un premier modèle d'élément, de type bâti, appartenant au premier niveau hiérarchique d'un équipement,
- la figure 3 est une image d'un premier modèle d'élément, de type diode électroluminescente (ou LED), appartenant au second niveau hiérarchique de l'équipement dont l'élément de premier niveau est illustré sur la figure 2,
- la figure 4 est une image d'un premier modèle d'élément, de type carte à circuits intégrés, appartenant au troisième niveau hiérarchique de l'équipement dont l'élément de premier niveau est illustré sur la figure 2,
- la figure 5 est une image constituée de la superposition des images des premiers modèles d'éléments illustrés sur les figures 2 à 4,
- la figure 6 est une image d'un second modèle de l'élément de troisième niveau dont un premier modèle est illustré sur la figure 4,
- la figure 7 est une image d'un second modèle d'élément, de type port d'entrée/sortie, appartenant au quatrième niveau hiérarchique de l'équipement dont l'élément de premier niveau est illustré sur la figure 2, et
- la figure 8 est une image constituée de la superposition des images des seconds modèles d'éléments illustrés sur les figures 6 et 7.

Ces dessins pourront non seulement servir à compléter l'invention, mais aussi contribuer à sa définition, le cas échéant.

L'invention propose un dispositif de gestion destiné à permettre au gestionnaire d'un réseau de communications, via le système de gestion du réseau, d'afficher sur un écran des images représentatives de certains au moins des équipements de son réseau.

Dans ce qui suit, on considère à titre d'exemple non limitatif que le réseau de communications est de type Internet (IP). Bien entendu, l'invention s'applique à d'autres types de réseau, comme par exemple aux réseaux de transmission de type WDM, SONET ou SDH, de données de type ATM, ou de voix de type classique, mobile ou NGN.

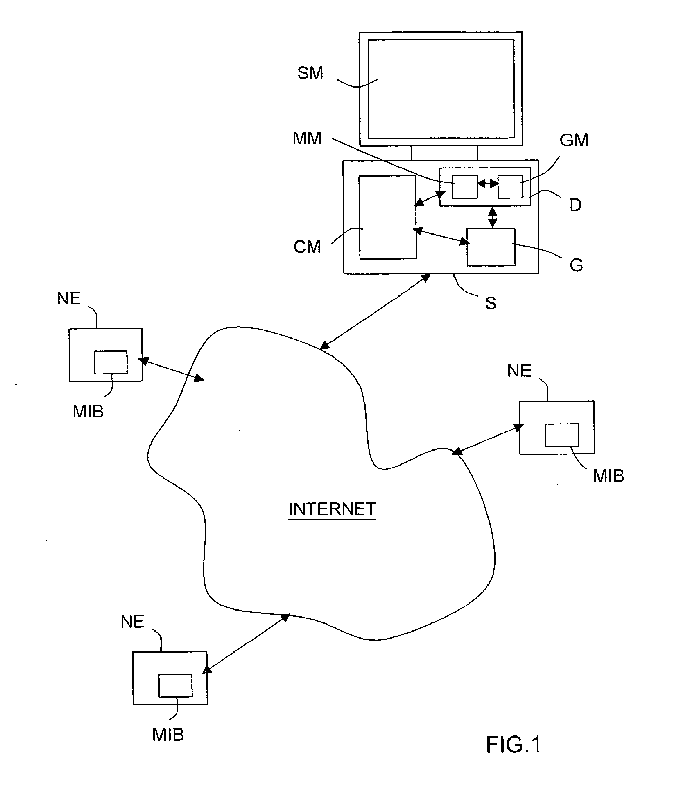

Dans l'exemple illustré sur la figure 1, le dispositif de gestion D, de l'invention, est implanté dans un serveur de gestion S du système de gestion du réseau (ou NMS pour « Network Management System »), de manière à coopérer avec son module de contrôle CM. Mais, il pourrait être implanté dans ce module de contrôle CM afin de constituer l'une de ses fonctionnalités. Par ailleurs, on peut envisager que le NMS comporte plusieurs serveurs de gestion, chacun équipé d'un dispositif de gestion D, et par exemple destinés à permettre chacun la gestion de l'affichage des images représentatives des équipements contenus dans des portions du réseau.

Le serveur de gestion S est préférentiellement équipé d'une interface graphique G, de type GUI (pour « Graphical User Interface »), permettant l'affichage d'images et d'informations sur l'écran de son moniteur SM.

Le réseau de communications comporte une multiplicité d'équipements de réseau NE, comme par exemple des serveurs, des terminaux, des commutateurs ou des routeurs, pouvant échanger des données, selon un protocole de gestion de réseau (par exemple le protocole SNMP (pour « Simple Network Management Protocol » RFC 2571-2580), CMISE/CMIP, CORBA ou TL1), avec le NMS et notamment avec son serveur de gestion S.

Chaque équipement NE comporte classiquement une base d'informations de gestion MIB (ou « Management Information Base »), également appelée base d'instances d'objets comprenant des champs d'information dont les valeurs spécifiques le caractérisent et qui sont accessibles au NMS.

Enfin, le module de contrôle CM du serveur de gestion S stocke des définitions de base d'informations de gestion MIB représentatives, pour chaque équipement NE géré, de se attributs, et notamment du texte qui le décrit, de ses droits d'accès et de l'organisation hiérarchique des niveaux auxquels appartiennent les éléments qui le constituent.

Les différents éléments qui constituent un équipement de réseau NE sont en effet organisés en niveaux hiérarchisés dont le premier niveau est, par définition, le plus élevé.

Par exemple, un équipement NE peut comporter un ou plusieurs bâtis (ou « racks ») Bi pouvant loger chacun une ou plusieurs diodes électroluminescentes LEDk et/ou un ou plusieurs rayonnages (ou « shelves ») Rj pouvant recevoir chacun une ou plusieurs cartes à circuits intégrés C-j-m susceptibles de comporter chacune un ou plusieurs ports d'entrée/sortie P-j-m-n.

Par ailleurs, selon l'invention, un élément d'équipement NE possède au moins une représentation graphique définie par un jeu de données regroupées dans un fichier stocké dans une mémoire M, dans un format choisi, par exemple GIF (pour « Graphical Interchange Format ») ou JPEG (pour « Joint Photographic Expert Group » ). Par exemple dans le cas de la décomposition précitée, les noms des fichiers peuvent être Bi.GIF, LEDk.GIF, Rj.GIF, C-j-m.GIF et P-j-m-n.GIF.

Ces représentations permettent au gestionnaire du réseau d'afficher sur l'écran du moniteur SM de son serveur de gestion S, grâce au dispositif de gestion D, de l'invention, des images des équipements de réseau NE gérés par ledit serveur, accompagnées éventuellement d'informations précisant, notamment, les statuts respectifs (y compris certains états d'alarme) de leurs éléments, fournies par le module de contrôle CM dudit serveur S.

Plus précisément, selon l'invention, on définit deux types de représentation graphique correspondant respectivement à des modèles primaires et secondaires d'éléments. Par définition, un modèle primaire d'élément est une première représentation graphique de l'élément au sein de son propre niveau d'appartenance et sans rattachement spécifique à un niveau supérieur au sien, définie par un jeu primaire de données agencé sous la forme d'un fichier primaire. Par ailleurs, un modèle secondaire d'élément est une seconde représentation graphique de l'élément au sein de son niveau d'appartenance, mais avec un rattachement spécifique à un niveau supérieur ou égal au sien, définie par un jeu secondaire de données agencé sous la forme d'un fichier secondaire.

Ainsi, un élément d'un niveau X peut posséder une ou plusieurs représentations associées éventuellement à des niveaux de représentation différents.

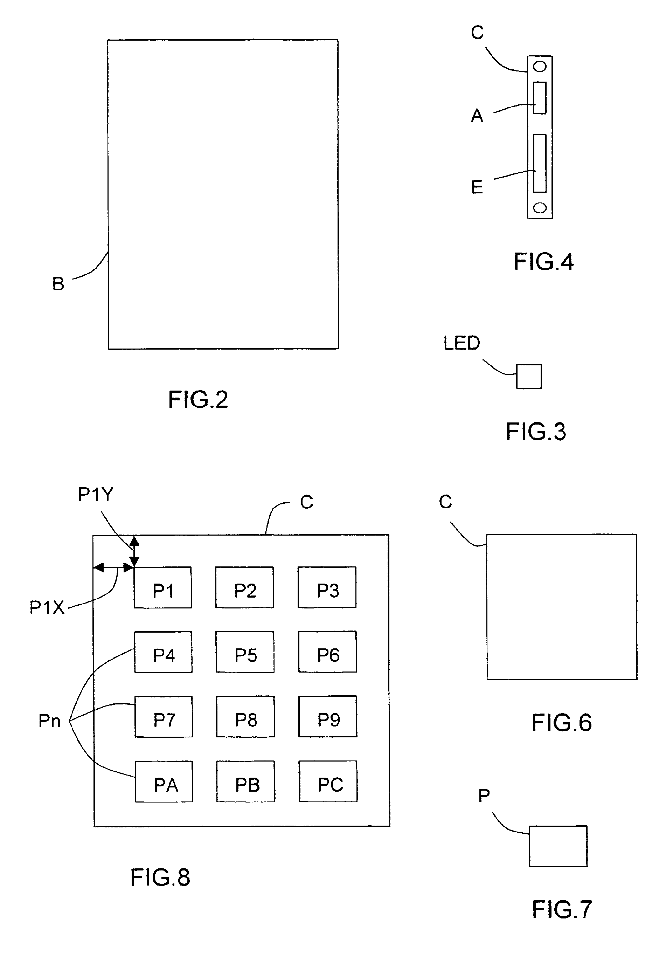

Par exemple, un élément peut ne posséder qu'un modèle primaire qui le représente au sein de son niveau, sans rattachement à un quelconque niveau supérieur au sien. C'est par exemple le cas du bâti B, appartenant au premier niveau, illustré sur la figure 2 sous la forme d'un rectangle, et des diodes électroluminescentes LED, appartenant au second niveau, illustrées sur la figure 3 sous la forme d'un carré. Dans ce cas, la représentation graphique de l'élément ne peut être affichée sur un écran qu'à condition que l'on ait requis son affichage ou celui d'un élément d'un niveau supérieur au sien, sans rattachement à un quelconque niveau.

Dans un autre exemple, un élément d'un niveau choisi peut posséder un modèle primaire qui le représente au sein de son niveau, mais sans rattachement à un quelconque niveau, et un modèle secondaire qui le représente au sein de son niveau, mais avec rattachement à ce niveau ou à un niveau supérieur. C'est par exemple le cas de la carte Cm illustrée d'une première façon (modèle primaire détaillé et réaliste représentant deux connecteurs d'entrée/sortie A et E) sur la figure 4 et d'une seconde façon (modèle secondaire (simple rectangle)) sur la figure 6. lci, la carte Cm, qui appartient au troisième niveau (X=3), possède un modèle primaire (figure 4) qui la représente au sein dudit troisième niveau, mais sans rattachement à un quelconque niveau, et un modèle secondaire (figure 6) qui la représente au sein dudit troisième niveau, mais avec rattachement à ce troisième niveau.

Dans ce cas, si l'on requiert l'affichage d'un élément d'un niveau choisi, supérieur à celui de la carte (par exemple le premier ou le second niveau), et des éléments des niveaux inférieurs à ce niveau choisi, mais sans rattachement entre ledit niveau choisi et les éléments appartenant auxdits niveaux inférieurs, on n'affiche que les premières représentations des éléments des différents niveaux, lorsque celles-ci existent. En revanche, si l'on requiert l'affichage d'un élément d'un niveau choisi et des éléments des niveaux inférieurs à ce niveau choisi, avec rattachement entre ledit niveau choisi et les éléments appartenant auxdits niveaux inférieurs, on n'affichera que les secondes représentations de l'élément désigné du niveau choisi et des éléments des niveaux inférieurs audit niveau choisi, lorsque celles-ci existent. Dans l'exemple de carte précité, le modèle primaire de la carte est affiché si l'on requiert l'affichage d'un élément du premier ou du second niveau sans rattachement aux niveaux inférieurs, et le modèle secondaire de la carte n'est affiché que si l'affichage de ladite carte est requis avec un rattachement aux éléments des niveaux inférieurs (ici le quatrième niveau).

Dans un autre exemple, un élément d'un niveau choisi peut ne posséder qu'un modèle secondaire qui le représente au sein dudit niveau, mais avec rattachement à son propre niveau ou à un niveau supérieur. C'est par exemple le cas des ports d'entrée/sortie P-j-m-n illustrés d'une unique façon (modèle secondaire (simple rectangle)) sur la figure 7. Ici, les ports d'entrée/sortie P-j-m-n, qui appartiennent au quatrième niveau (X=4), ne possèdent qu'un modèle secondaire qui les représente au sein du quatrième niveau, mais avec rattachement au troisième niveau (celui des cartes C-j-m).

Dans ce cas, la représentation graphique d'un élément (ici, un port d'entrée/sortie P-j-m-n) ne peut être affichée sur un écran qu'à condition que l'on ait requis l'affichage d'un élément d'un niveau supérieur au sien (ici, le troisième niveau auquel appartiennent les cartes C-j-m) avec ses rattachements aux éléments des niveaux inférieurs. En d'autres termes, dans une telle situation, un élément ne pourra pas être visualisé si l'affichage requis désigne un élément d'un niveau supérieur au sien (et des éléments des niveaux inférieurs), sans rattachement entre ledit niveau choisi et lesdits éléments des niveaux inférieurs.

Bien entendu, un élément peut posséder plusieurs modèles secondaires rattachés (ou associés) à des éléments appartenant à des niveaux différents, et par conséquent permettant d'afficher plusieurs représentations différentes de cet élément selon le niveau d'affichage requis.

Il est important de noter qu'un fichier primaire ou secondaire, dont les données définissent un modèle primaire ou secondaire (ou une première ou seconde représentation) d'élément, comporte des données de position et, généralement, des données d'image.

Par conséquent, lorsqu'un élément possède une première ou seconde représentation graphique constituée seulement de données de position, il ne peut pas faire l'objet d'un affichage sur un écran. Dans cette situation, la représentation de l'élément permet d'en définir les dimensions et la position par rapport à l'élément qui le contient au sein du niveau supérieur au sien, et par conséquent de positionner précisément les éléments des niveaux inférieurs au sien par rapport aux éléments des niveaux supérieurs.

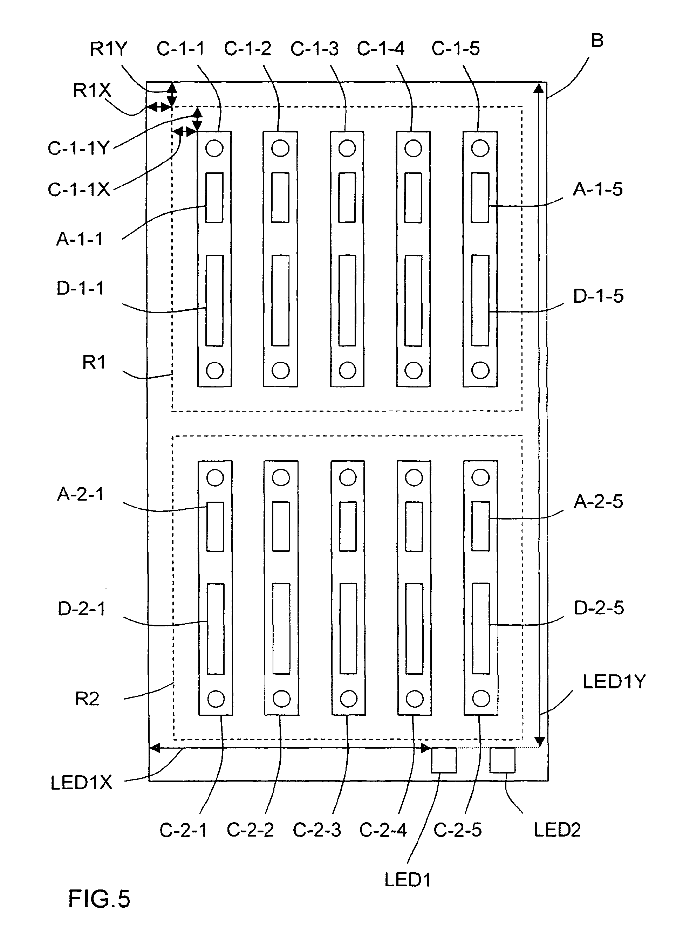

Cette situation correspond au cas des rayonnages Rj, matérialisés par des pointillés sur la figure 5, afin de faciliter la compréhension de la méthode de positionnement des images superposées des éléments appartenant à des niveaux différents. Ici, les rayonnages Rj appartenant au deuxième niveau ne possèdent en effet qu'un modèle primaire défini par un jeu primaire qui ne comporte que des données de position.

Il ressort de ce qui précède qu'un élément d'équipement possède un ou plusieurs attributs définis chacun par un nom de fichier.

L'exemple illustré sur la figure 5 correspond au cas où l'on a requis l'affichage du premier niveau et des niveaux inférieurs, sans rattachement à un quelconque niveau. Par conséquent, seules sont affichées les données d'images des jeux primaires qui définissent des modèles primaires d'éléments.

Ici, l'équipement est organisé en quatre niveaux d'éléments. Le premier niveau est celui de l'unique bâti B (i=1) qui ne possède qu'une première représentation (ou modèle primaire) illustrée sur la figure 2. Le second niveau est celui des deux rayonnages R1 et R2 (j=1 ou 2), logés dans le bâti B, et des deux diodes électroluminescentes LED1 et LED2 (k=1 ou 2), intégrées dans la face avant du bâti B. Ces rayonnages R1 et R2 ne possèdent qu'un modèle primaire défini exclusivement par des données de position mais pas par des données d'image, tandis que les deux diodes électroluminescentes LED1 et LED2 ne possèdent qu'une première représentation (ou modèle primaire) illustrée sur la figure 3. Le troisième niveau est celui des 5 cartes à circuits intégrés C-1-1 à C-1-5 (j=1, m=1 à 5), logées dans le premier rayonnage R1, et des 5 cartes C-2-1 à C-2-5 (j=2, m=1 à 5), logées dans le second rayonnage R2. Ces cartes à circuits intégrés C possèdent une première représentation (ou modèle primaire) illustrée sur la figure 8 et une seconde représentation (ou modèle secondaire) illustrée sur la figure 6. Le quatrième niveau est celui des 12 ports d'entrée/sortie P1 à P9 et PA à PC (j=1 ou 2, m=1 à 5, n=1 à 9 et A à C), placés sur les cartes à circuits intégrés C, et qui ne possèdent qu'une seconde représentation (ou modèle secondaire) illustrée sur la figure 7 et correspondant à un rattachement au troisième niveau.

Les ports d'entrée/sortie P-j-m-n ne possédant pas de première représentation graphique, ils ne peuvent pas être affichés dans la superposition d'images illustrée sur la figure 5. Ils sont en revanche affichés dans la superposition d'images illustrée sur la figure 8 qui correspond à une situation dans laquelle on a requis l'affichage d'une carte C du troisième niveau avec ses rattachements aux éléments des niveaux inférieurs (ici les ports d'entrée/sortie P du quatrième niveau).

L'affichage d'images (ou représentations graphiques) d'éléments appartenant à des niveaux différents fait appel aux données de position contenues dans les fichiers primaires ou secondaires. Ces données de position définissent préférentiellement la position d'un élément d'un niveau donné par rapport à celle d'un élément du niveau immédiatement supérieur. Cela permet en effet d'afficher rapidement les éléments appartenant à des niveaux intermédiaires rattachés, sans faire appel aux données de position des éléments appartenant aux niveaux les plus élevés (à commencer par le premier niveau).

Dans l'exemple illustré sur la figure 5, l'angle supérieur gauche du rectangle, représentant le bâti B du premier niveau, sert d'origine O1, de coordonnées (0,0) dans un repère orthonormé (x,y), pour le deuxième niveau. Le premier rayonnage R1 est ensuite positionné par rapport à cette origine O1 et définit une nouvelle origine O2-1 pour les sous-éléments du niveau inférieur suivant. Les coordonnées de O2-1 par rapport à O1 sont par exemple (R1x,R1y). Le second rayonnage R2 est positionné par rapport à l'origine O1 et définit une nouvelle origine O2-2 pour les sous-éléments du niveau inférieur suivant. Les coordonnées de O2-2 par rapport à O1 sont par exemple (R2x,R2y). Les diodes électroluminescentes LED1 et LED2 sont positionnées par rapport à l'origine O1 et leurs coordonnées par rapport à O1 sont par exemple (LED1x,LED1y) et (LED2x,LED2y). Les cartes C-1-1 à C-1-5 du premier rayonnage R1 sont ensuite positionnées par rapport à l'origine O2-1, tandis que les cartes C-2-1 à C-2-5 du second rayonnage R2 sont positionnées par rapport à l'origine O2-2. Les coordonnées de C-1-1 par rapport à O2-1 sont par exemple (C-1-1x,C-1-1y), tandis que les coordonnées de C-2-1 par rapport à O2-2 sont par exemple (C-2-1x,C-2-1y).

Dans l'exemple illustré sur la figure 8, l'angle supérieur gauche du rectangle, représentant une carte C du troisième niveau, sert d'origine O', de coordonnées (0,0) dans un repère orthonormé (x,y), au quatrième niveau. Les ports d'entrée/sortie P1 à P9 et PA à PC de la carte C sont ensuite positionnés par rapport à l'origine O'.

Par ailleurs, comme cela est illustré sur la figure 8, il est possible d'afficher un label (ou plus généralement des informations sur les images représentatives d'éléments ou à côté de celles-ci). Ici, ce sont les différents ports d'entrée/sortie P-j-m-n qui comportent une inscription ou « label » (« Pn ») permettant de les différencier et de connaître leurs positions respectives au sein de la carte C-j-m.

Afin de mettre en oeuvre les deux modes d'affichage présentés ci-avant (sans et avec rattachement), on peut procéder comme indiqué ci-après. Bien entendu, la méthode indiquée, mise en oeuvre par le dispositif de gestion D selon l'invention, est un exemple de mise en oeuvre, nullement limitatif.

Le dispositif de gestion D comprend un module de gestion GM couplé à une mémoire MM dans laquelle sont stockés les fichiers primaires et secondaires dont les données définissent les modèles primaires et secondaires des éléments constituant les équipements de réseau NE.

Le module de gestion GM, en liaison avec l'interface graphique G, est chargé d'analyser les requêtes d'affichage d'éléments, saisies par le gestionnaire de réseau, afin de lui adresser en retour des données représentatives des images des éléments requis.

Comme indiqué précédemment, le gestionnaire du réseau peut requérir l'affichage de deux types de représentation graphique. Le premier type concerne l'affichage du ou des éléments appartenant à un niveau spécifié et du ou des éléments appartenant à chaque niveau inférieur audit niveau spécifié, mais sans rattachement entre lesdits niveaux. En d'autres termes, ce premier type d'affichage requiert l'extraction des jeux primaires dont les données définissent les modèles primaires des éléments à compter d'un niveau spécifié (par exemple Bi.GIF, Lk.GIF, Rj.GIF et C-j-m.GIF, comme illustré sur la figure 5). Le second type concerne l'affichage du ou des éléments appartenant à un niveau spécifié et du ou des éléments appartenant à chaque niveau inférieur audit niveau spécifié, mais avec un rattachement entre les éléments de ces niveaux inférieurs et ledit niveau spécifié. En d'autres termes, ce second type d'affichage requiert l'extraction des jeux secondaires dont les données définissent les modèles secondaires des éléments à compter d'un niveau spécifié (par exemple C-j-m_Niveau3.GIF et P-j-m-n_Niveau3.GIF, comme illustré sur la figure 8).

Par exemple, afin de requérir l'affichage superposé des modèles primaires d'éléments qui constituent un équipement choisi (illustré sur la figure 5), le gestionnaire saisit une commande qui désigne le premier niveau de cet équipement, comme par exemple « B ».

A réception de cette commande, le module de gestion GM du dispositif D déclenche une procédure de traitement initiée par la vérification de l'existence du fichier primaire « B.GIF ». Cette vérification peut être par exemple effectuée dans la mémoire MM à l'aide de la commande « B.drawSupported ». Si la réponse à cette commande est « false » (ou « faux »), le module de gestion GM rejette la requête du gestionnaire de réseau. En revanche, si la réponse à cette commande est « true » (ou « vrai »), le module de gestion GM extrait le fichier « B.GIF », par exemple en utilisant la commande « B.drawlmage ». Les données d'image de ce fichier primaire sont alors soit immédiatement affichées, soit mises en attente de fin de procédure pour être affichées en même temps que les autres images. Le module de gestion GM vérifie ensuite s'il existe un niveau inférieur au premier niveau qui contient des jeux primaires. Pour ce faire, il peut, par exemple, utiliser la commande « B.drawNextLevel ». Si la réponse à cette commande est « false » (ou « faux »), le module de gestion GM effectue la même vérification au niveau inférieur suivant. En revanche, si la réponse à cette commande est « true » (ou « vrai »), le module de gestion GM procède à l'extraction du ou des fichiers désignés, par exemple en utilisant les commandes « R1.drawlmage », « R2.drawlmage », « LED1.drawlmage » et « LED2.drawlmage ». Dans l'exemple illustré, les quatre fichiers « R1.GIF », « R2.GIF », « LED1.GIF » et « LED2.GIF » du second niveau sont successivement extraits. Ils correspondent respectivement aux premier R1 et second R2 rayonnages et aux première LED1 et seconde LED2 diodes électroluminescentes. Les données d'image de ces fichiers primaires sont alors soit immédiatement affichées après recalage de leurs données de positions par rapport à l'origine de l'élément du niveau supérieur qui les intègre, soit mises en attente de fin de procédure pour être affichées en même temps que les autres images.

Le module de gestion GM vérifie ensuite pour chaque élément du second niveau s'il existe des jeux primaires dans le niveau inférieur (ici, le troisième niveau). Pour ce faire, il peut, par exemple, utiliser les commandes « R1.drawNextLevel », « R2.drawNextLevel », « LED1.drawNextLevel » et « LED2.drawNextLevel ». Si la réponse à l'une de ces commandes est « false » (ou « faux »), le module de gestion GM arrête sa vérification pour l'élément concerné. C'est notamment le cas ici des diodes LED qui ne possèdent pas de sous-niveau. En revanche, si la réponse à l'une de ces commandes est « true » (ou « vrai »), le module de gestion GM procède à l'extraction du ou des fichiers désignés, par exemple en utilisant les commandes « C-j-m-n.drawlmage ». Dans l'exemple illustré, les premier R1 et second R2 rayonnages possèdent chacun un sous-niveau comportant cinq cartes à circuits intégrés associées à des fichiers primaires. Par conséquent, les cinq fichiers primaires « C-1-1.GIF » à « C-1-5.GIF » des cartes du troisième niveau intégrées au premier rayonnage R1, et les cinq fichiers primaires « C-2-1.GIF » à « C-2-5.GIF » des cartes du troisième niveau intégrées au second rayonnage R2 sont successivement extraits. Les données d'image de ces fichiers primaires sont alors soit immédiatement affichées après recalage de leurs données de positions par rapport à l'origine de l'élément du niveau supérieur qui les intègre, soit mises en attente de fin de procédure pour être affichées en même temps que les autres images.

Puis, le module de gestion GM vérifie pour chaque élément du troisième niveau s'il existe des jeux primaires dans le niveau inférieur (ici, le quatrième niveau). Pour ce faire, il peut, par exemple, utiliser les commandes « C-j-m.drawNextLevel » (où j = 1 ou 2 et m = 1 à 5). lci, il existe des jeux secondaires dans le quatrième niveau, mais pas de jeu primaire. Par conséquent la réponse à chaque commande « C-j-m.drawNextLevel » est « false » (ou faux).

Le résultat de cette procédure d'extraction se traduit par la superposition des images des modèles primaires des éléments B, LEDk et C-j-m. Comme indiqué précédemment, les fichiers primaires des rayonnages R1 et R2 ne contenant que des données de position permettant le positionnement des cartes C-j-m du niveau inférieur, les rayonnages ne sont donc pas affichés.

Afin de requérir l'affichage superposé des modèles secondaires d'éléments qui constituent un équipement choisi (illustré sur la figure 5), le gestionnaire saisit tout d'abord une commande qui désigne un élément d'équipement d'un niveau choisi et spécifie qu'il souhaite lui rattacher les éléments des niveaux inférieurs. En d'autres termes, le gestionnaire indique au dispositif D qu'il souhaite obtenir des images détaillées de certains éléments (fonction de « zooming »). Par exemple, le gestionnaire souhaite voir les modèles secondaires de l'élément C-j-m du niveau 3 et des éléments intégrés à celui-ci dans les niveaux inférieurs (ici les ports d'entrée/sortie P-j-m-n du quatrième niveau). Pour ce faire, il peut, par exemple, saisir la commande « C-j-m_Niveau3 ».

A réception de cette requête, le module de gestion GM du dispositif D déclenche une procédure de traitement initiée par la vérification de l'existence du fichier secondaire « C-j-m_Niveau3.GIF » dans la mémoire MM. Cette vérification peut être par exemple effectuée dans la mémoire MM à l'aide de la commande « C-j-m_Niveau3.drawSupported ». Si la réponse à cette commande est « false » (ou « faux »), le module de gestion GM rejette la requête du gestionnaire de réseau. En revanche, si la réponse à cette commande est « true » (ou « vrai »), le module de gestion GM commence par générer une commande telle que « C-j-m.drawName = « Niveau3 » » indiquant que l'on doit extraire tous les éléments qui appartiennent à des niveaux inférieurs au troisième niveau de l'élément C-j-m et qui possèdent un fichier secondaire présentant une extension « _Niveau3 ».

Puis, il extrait le fichier « C-j-m_Niveau3.GIF » en utilisant une commande telle que « C-j-m.drawlmage_Niveau3 ». Le fichier est alors soit immédiatement affiché, soit mis en attente de fin de procédure pour être affiché en même temps que les autres images. Le module de gestion GM vérifie ensuite s'il existe un niveau inférieur au troisième niveau qui contient des jeux secondaires. Pour ce faire, il peut, par exemple, utiliser la commande « C-j-m_Niveau3.drawNextLevel ». Si la réponse à cette commande est « false » (ou « faux »), le module de gestion GM effectue la même vérification au niveau inférieur suivant. En revanche, si la réponse à cette commande est « true » (ou « vrai »), ce qui est le cas ici, le module de gestion GM procède à l'extraction du ou des fichiers désignés, par exemple en utilisant les commandes « P-j-m-n.drawlmage_Niveau3 ». Dans l'exemple illustré, les douze fichiers « P-j-m-n_Niveau3.GIF » (où n = 1 à 9 et A à C) du quatrième niveau sont successivement extraits. Ils correspondent respectivement aux différents ports d'entrée/sortie de la carte C-j-m. Les données d'image de ces fichiers secondaires sont alors soit immédiatement affichées après recalage de leurs données de positions par rapport à l'origine de l'élément du niveau supérieur qui les intègre, soit mises en attente de fin de procédure pour être affichées en même temps que les autres images.

Ici, les fichiers secondaires des ports d'entrée/sortie comportent des données (ou « labels ») représentatives du nom du port concerné (« Pn »). Par conséquent, le module de gestion GM génère une commande pour chaque port P-j-m-n, par exemple de type « P-j-m-n_Niveau3. drawLabel », afin d'associer aux données d'image des ports d'entrée/sortie P-j-m-n le label « Pn » associé.

Le module de gestion GM vérifie ensuite pour chaque élément du quatrième niveau s'il existe des jeux secondaires dans le niveau inférieur (ici, le cinquième niveau). Pour ce faire, il peut, par exemple, utiliser les commandes « P-j-m-n_Niveau3.drawNextLevel ». La réponse à chacune de ces commandes étant, ici, « false » (ou « faux »), le module de gestion GM stoppe la procédure de recherche d'image à afficher.

Le résultat de cette procédure d'extraction se traduit par la superposition des images des modèles secondaires des éléments C-j-m et P-j-m-n, illustrée sur la figure 8.

Il est important de noter qu'une partie au moins des données d'un jeu secondaire, qui définit un modèle secondaire d'élément, peut être identique à une partie des données d'un jeu primaire qui définit le modèle primaire de cet élément. Par ailleurs, un élément peut posséder plusieurs modèles secondaires associés à des niveaux différents.

Par ailleurs, d'autres commandes peuvent être utilisées par le module de gestion D pour traiter les données extraites des fichiers primaires et secondaires. Parmi ces commandes, on peut notamment citer :
- « drawWidth » et « drawHeight », ou « drawWidth_NiveauX » et « drawHeight_NiveauX », pour redimensionner la largeur et la hauteur d'une image définie par les données d'un jeu primaire ou secondaire rattaché à un niveau X ;
- « drawLabelx » et « drawLabelx », ou « drawLabelx_NiveauX » et « drawLabely_NiveauX », pour modifier la position (x,y) d'un label à associer à une image définie par les données d'un jeu primaire ou secondaire rattaché à un niveau X ;
- « drawLabelVertical » ou « drawLabelVertical_NiveauX » pour afficher verticalement un label à associer à une image définie par les données d'un jeu primaire ou secondaire rattaché à un niveau X. En l'absence de cette commande, le label est préférentiellement affiché de façon horizontale ;
- « drawLabeIFontName », « drawLabeIFontType » et « drawLabelFontSize », ou « drawLabelFontName_NiveauX », « drawLabelFontType_NiveauX » et « drawLabelFontSize_NiveauX » pour définir les caractéristiques de la police (ou « font ») à utiliser.

En outre, lorsque le dispositif de gestion D, de l'invention, est couplé au module de contrôle CM du serveur de gestion S (comme illustré sur la figure 1), il est possible d'adjoindre aux images des éléments affichés des informations représentatives du statut de ces éléments, y compris leurs états d'alarme respectifs. Ces informations sont en effet obtenues par le module de contrôle CM par extraction, selon le protocole de gestion du réseau (par exemple SNMP), de certaines valeurs de champs contenues dans les bases d'informations de gestion MIB des équipements NE. On peut également envisager un rafraîchissement de l'affichage lorsque le module de gestion GM reçoit du module de contrôle CM un message signalant qu'un événement modifiant les interactions entre les éléments affichés, ou les éléments eux-mêmes ou encore les informations représentatives des statuts respectifs des éléments, est survenu au sein du réseau.

Le module de gestion GM du dispositif de gestion D, de l'invention, peut être réalisé sous la forme de circuits électroniques (ou « hardware »), de modules logiciels ou informatiques (ou « software »), ou d'une combinaison de circuits et de logiciels. Lorsqu'une partie au moins du module de gestion GM est réalisée sous la forme de modules logiciel, ces derniers sont préférentiellement constitués de codes de programmes en langage Java.

L'invention ne se limite pas aux modes de réalisation du dispositif de gestion décrits ci-avant, seulement à titre d'exemple, mais elle englobe toutes les variantes que pourra envisager l'homme de l'art dans le cadre des revendications ci-après.

Ainsi, on a décrit un dispositif de gestion intégré dans un serveur de gestion, voire même dans son module de contrôle. Mais, le dispositif de gestion pourrait être implanté dans un boîtier couplé au module de contrôle du serveur de gestion.

Par ailleurs, on a décrit un exemple d'affichage de représentations d'éléments organisés selon les niveaux hiérarchisés bâti, rayonnages et diodes électroluminescentes, cartes à circuits intégrés et ports d'entrée/sortie. Mais l'invention n'est pas limitée à cet exemple de niveaux, et s'applique à tous les types de niveaux hiérarchisés.

## Revendications

1. Dispositif (D) de gestion de l'affichage d'images représentatives d'équipements (NE) d'un réseau de communications, comportant des éléments associés à des niveaux hiérarchisés, **caractérisé en ce que** chaque élément d'équipement est associé à un jeu primaire de données, stocké dans une mémoire (MM), qui le représente au sein de son niveau d'appartenance, sans rattachement spécifique à un niveau supérieur au sien, et/ou au moins un jeu secondaire de données, stocké dans ladite mémoire (MM), qui le représente au sein de son niveau d'appartenance lorsqu'il est rattaché à un niveau supérieur ou égal au sien, et **en ce qu'**il comprend des moyens de gestion (GM) propres, en cas de réception d'une requête désignant un niveau choisi d'un équipement (NE) avec ou sans rattachement, à accéder auxdits jeux primaires et secondaires de manière à extraire de la mémoire les jeux primaires ou secondaires des éléments de l'équipement qui appartiennent audit niveau désigné et aux niveaux qui lui sont inférieurs, selon que ledit niveau est désigné avec ou sans rattachement.

2. Dispositif selon la revendication 1, **caractérisé en ce que** lesdits moyens de gestion (GM) sont agencés pour adresser les jeux primaires ou secondaires extraits à une interface graphique (G).

3. Dispositif selon l'une des revendications 1 et 2, **caractérisé en ce que** certains éléments sont associés à des jeux primaires et secondaires au moins en partie identiques.

4. Dispositif selon l'une des revendications 1 à 3, **caractérisé en ce que** lesdits moyens de gestion (GM) sont agencés pour rafraîchir les données d'éléments affichés en cas de réception d'un message signalant qu'un événement concernant lesdits éléments est survenu au sein du réseau.

5. Serveur de gestion (S) d'un système de gestion de réseau de communications, **caractérisé en ce qu**'il comporte un dispositif de gestion (D) selon l'une des revendications 1 à 4.

6. Serveur selon la revendication 5, **caractérisé en ce que** ledit dispositif de gestion (D) est implanté dans un dispositif de contrôle (CM).

7. Utilisation du dispositif de gestion (D) et du serveur (S) selon l'une des revendications précédentes dans les technologies réseaux devant être gérées.

8. Utilisation selon la revendication 7, **caractérisée en ce que** lesdites technologies réseaux sont choisies dans un groupe comprenant les réseaux de transmission, en particulier de type WDM, SONET et SDH, de données, en particulier de type Internet-IP et ATM, et de voix, en particulier de type classique, mobile et NGN.

## Claims

1. A system (D) for managing the display of images representing network equipments (NE) of a communication network, said system including elements associated with hierarchical levels, and said system being **characterised in that** each equipment element is associated with a set of primary data stored in a memory (MM) which represents it within the level to which it belongs with no specific attachment to a level higher than itself and/or at least one set of secondary data stored in said memory (MM) which represents it within the level to which it belongs when it is attached to a level higher than or equal to its own, and **in that** it includes management means (GM) adapted, in the event of receiving a request designating a chosen level of a network equipment (NE) with or without attachment, to access said sets of primary and secondary data in order to extract from the memory the sets of primary or secondary data of the elements of the equipment that belong to said designated level and to levels lower than it, according to whether said level is designated with or without attachment.

2. A system according to claim 1, **characterised in that** said management means (GM) are adapted to send the extracted sets of primary or secondary data to a graphical interface (G).

3. A system according to claim 1 or 2, **characterised in that** some elements are associated with sets of primary and secondary data that are at least partly identical.

4. A system according to any of claims 1 to 3, **characterised in that** said management means (GM) are adapted to refresh the data of elements displayed in the event of receiving a message reporting that an event relating to said elements has occurred within the network.

5. A management server (S) of a communication network management system, **characterised in that** it includes a management system (D) according to any one of claims 1 to 4.

6. A server according to claim 5, **characterised in that** said management system (D) is installed in a control system (CM).

7. Use of the management system (D) and the server (S) according to any one of the preceding claims in the network technologies requiring to be managed.

8. Use according to claim 7, **characterised in that** said network technologies are chosen in a group comprising transmission networks, in particular WDM, SONET and SDH networks, data networks, in particular Internet-IP and ATM networks, and voice networks, in particular conventional, mobile and NGN networks.

## Patentansprüche

1. Vorrichtung (D) für die Verwaltung der Anzeige von Bildern, welche für Netzwerkeinrichtungen (NE) eines Kommunikationsnetzes stehen, und Elemente einschließen, die mit hierarchischen Ebenen verknüpft sind, **dadurch gekennzeichnet, dass** jedes Einrichtungselement mit einem primären Datensatz verknüpft ist, der in einem Speicher (MM) abgespeichert ist und der es innerhalb seiner Zugehörigkeitsebene darstellt, ohne spezifische Angliederung an eine höhere Ebene als die eigene, und/oder mit mindestens einem sekundären Datensatz, der in diesem Speicher (MM) abgespeichert ist und es innerhalb seiner Zugehörigkeitsebene darstellt, wenn es einer Ebene höher oder gleich der eigenen angegliedert ist, und **dadurch gekennzeichnet, dass** sie Mittel zur Verwaltung (GM) einschließt, die im Stande sind, wenn sie eine Anforderung empfangen, die eine gewählte Ebene einer Einrichtung (NE) mit oder ohne Angliederung bezeichnet, auf diese primären und sekundären Sätze zuzugreifen, um aus dem Speicher die primären oder sekundären Sätze der Einrichtungselemente herauszuziehen, die zu dieser bezeichneten Ebene gehören und zu den darunter liegenden Ebenen, je nachdem, ob diese Ebene mit oder ohne Angliederung bezeichnet wird.

2. Vorrichtung gemäß Anspruch 1, **dadurch gekennzeichnet, dass** diese Mittel zur Verwaltung (GM) so aufgebaut sind, dass sie die primären oder sekundären Sätze, die herausgezogen wurden, an eine Graphikschnittstelle (G) adressieren.

3. Vorrichtung gemäß Anspruch 1 oder Anspruch 2, **dadurch gekennzeichnet, dass** einige Elemente mit zumindest teilweise identischen primären und sekundären Sätzen verknüpft sind.

4. Vorrichtung gemäß einem der Ansprüche 1 bis 3, **dadurch gekennzeichnet, dass** diese Mittel zur Verwaltung (GM) so aufgebaut sind, dass sie die Daten der angezeigten Elemente auffrischen, wenn sie eine Meldung empfangen, die anzeigt, dass ein Ereignis betreffend diese angezeigten Elemente im Netz eingetreten ist.

5. Verwaltungsserver (S) eines Systems zur Verwaltung eines Kommunikationsnetzes, **dadurch gekennzeichnet, dass** er eine Verwaltungsvorrichtung (D) gemäß einem der Ansprüche 1 bis 4 einschließt.

6. Server gemäß Anspruch 5, **dadurch gekennzeichnet, dass** diese Verwaltungsvorrichtung (D) in einer Steuerungsvorrichtung (CM) angesiedelt ist.

7. Verwendung der Verwaltungsvorrichtung (D) und des Servers (S) gemäß einem der vorstehenden Ansprüche in den Netzwerktechnologien, die verwaltet werden müssen.

8. Verwendung gemäß Anspruch 7, **dadurch gekennzeichnet, dass** diese Netzwerktechnologien aus einer Gruppe ausgewählt werden, die Übertragungsnetze, insbesondere vom Typ WDM, SONET und SDH, Datennetze, insbesondere vom Typ Internet-IP oder ATM, und Sprachnetze, insbesondere herkömmliche, mobile oder NGN-Netze einschließt.
